# EUROPÄISCHE PATENTSCHRIFT

(11) **EP 1 192 347 B1**
(45) Veröffentlichungstag und Bekanntmachung des Hinweises auf die Patenterteilung: **15.09.2004**
(21) Anmeldenummer: 00947767.0
(22) Anmeldetag: 26.05.2000
(51) Int. Cl.: F02D 41/40, F02D 35/00, F02D 41/30

(54) **VERFAHREN ZUM BETREIBEN EINER BRENNKRAFTMASCHINE**
METHOD FOR OPERATING AN INTERNAL COMBUSTION ENGINE
PROCEDE POUR L'EXPLOITATION D'UN MOTEUR A COMBUSTION INTERNE

(30) Priorität: 09.06.1999 DE 19926310
(43) Veröffentlichungstag der Anmeldung: 03.04.2002
(73) Patentinhaber: ROBERT BOSCH GMBH, 70442 Stuttgart (DE)
(72) Erfinder: ROTH, Andreas, D-75417 Muehlacker-Lomersheim (DE)
(86) Internationale Anmeldenummer: PCT/DE2000/001719
(87) Internationale Veröffentlichungsnummer: WO 2000/077375

(56) Entgegenhaltungen:
- EP-A- 0 893 593
- DE-A- 19 829 308
- PATENT ABSTRACTS OF JAPAN vol. 1998, no. 05, 30. April 1998 (1998-04-30) & JP 10 018890 A (UNISIA JECS CORP), 20. Januar 1998 (1998-01-20)
- PATENT ABSTRACTS OF JAPAN vol. 1999, no. 08, 30. Juni 1999 (1999-06-30) & JP 11 062731 A (NISSAN MOTOR CO LTD), 5. März 1999 (1999-03-05)
- PATENT ABSTRACTS OF JAPAN vol. 016, no. 328 (M-1281), 16. Juli 1992 (1992-07-16) & JP 04 094444 A (TOYOTA MOTOR CORP), 26. März 1992 (1992-03-26)
- PATENT ABSTRACTS OF JAPAN vol. 1999, no. 10, 31. August 1999 (1999-08-31) & JP 11 132097 A (NISSAN MOTOR CO LTD), 18. Mai 1999 (1999-05-18)

## Beschreibung

### Stand der Technik

Die Erfindung betrifft ein Verfahren zum Betreiben einer Brennkraftmaschine insbesondere eines Kraftfahrzeugs, bei dem Kraftstoff in einer ersten Betriebsart während einer Ansaugphase oder in einer zweiten Betriebsart während einer Verdichtungsphase direkt in einen Brennraum eingespritzt und entzündet wird, und bei dem ein Luft/Kraftstoff-Gemisch über eine Tankentlüftung in den Brennraum angesaugt wird. Ebenfalls betrifft die Erfindung ein entsprechendes Steuergerät für eine Brennkraftmaschine insbesondere eines Kraftfahrzeugs.

Ein derartiges Verfahren sowie ein derartiges Steuergerät sind beispielsweise aus der EP-A-893 593 bekannt.

Bei einer sogenannten Benzin-Direkteinspritzung wird der Kraftstoff in einem Homogenbetrieb während der Ansaugphase oder in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlauf- und Teillastbetrieb geeignet ist. Beispielsweise in Abhängigkeit von dem angeforderten Drehmoment wird bei einer derartigen direkteinspritzenden Brennkraftmaschine zwischen den genannten Betriebsarten umgeschaltet.

Im Homogenbetrieb kann über eine Tankentlüftung ein Luft/Kraftstoff-Gemisch dem Brennraum zugeführt werden. Da die direkt während der Ansaugphase in den Brennraum eingespritzte Kraftstoffmasse bis zur Entzündung homogen verwirbelt wird, entsteht insgesamt ein homogenes Gemisch in dem Brennraum. Das Lambda des Luft/Kraftstoff-Gemischs in dem Brennraum kann damit über eine Lambda-Regelung auf Lambda = 1 gesteuert und/oder geregelt werden.

Auf diese Weise kann über eine derartige Tankentlüftung im Homogenbetrieb ein mit Kraftstoff aufgeladenes Aktivkohlefilter wieder entladen werden. Der in einem Kraftstofftank verdunstende Kraftstoff kann damit über die Tankentlüftung verwertet werden.

Im Schichtbetrieb besteht die Gefahr, dass das über die Tankentlüftung angesaugte Luft/Kraftstoff-Gemisch aufgrund seines geringen Kraftstoffanteils zu mager ist und damit nicht entzündet wird, so dass unverbrannter Kraftstoff in die Umwelt abgegeben wird.

Aufgabe der Erfindung ist es, ein Verfahren zum Betreiben einer Brennkraftmaschine zu schaffen, mit dem ein möglichst geringer Kraftstoffverbrauch bei gleichzeitig möglichst geringer Abgabe von verdunstetem Kraftstoff an die Umwelt erreichbar ist.

Diese Aufgabe wird bei einem Verfahren der eingangs genannten Art erfindungsgemäß dadurch gelöst, dass in einer dritten Betriebsart über die Tankentlüftung ein mageres Luft/Kraftstoff-Gemisch in den Brennraum angesaugt und zusätzlich Kraftstoff in der Ansaugphase und in der Verdichtungsphase in den Brennraum eingespritzt wird. Bei einem Steuergerät wird die Aufgabe entsprechend gelöst.

Die dritte Betriebsart stellt ein Kombination des Homogenbetriebs und des Schichtbetriebs dar. Insbesondere durch die Einspritzung von Kraftstoff während der Ansaugphase wird erreicht, dass das an sich zu magere, über die Tankentlüftung angesaugte Luft/Kraftstoff-Gemisch fetter und damit zündfähig wird. Das in dem Brennraum der Brennkraftmaschine befindliche gesamte Luft/Kraftstoff-Gemisch kann damit durch die Zündkerze entzündet und verbrannt werden.

Auf diese Weise wird einerseits der aus dem Tank verdampfende Kraftstoff über die Tankentlüftung wieder dem Brennraum zugeführt und dort verwertet. Andererseits wird gewährleistet, dass auch bei einem mageren, über die Tankentlüftung zugeführten Luft/Kraftstoff-Gemisch eine Verbrennung in dem Brennraum stattfindet und damit kein unverbrannter Kraftstoff an die Umwelt abgegeben wird.

Bei einer vorteilhaften Weiterbildung der Erfindung wird das Lambda des über die Tankentlüftung angesaugten Luft/Kraftstoff-Gemischs ermittelt. Dabei ist es vorteilhaft, wenn das Lambda in Abhängigkeit von der Konzentration des Luft/Kraftstoff-Gemischs und/oder in Abhängigkeit von der angesaugten Luftmasse ermittelt wird.

Bei einer weiteren vorteilhaften Weiterbildung der Erfindung wird die dritte Betriebsart nur dann ausgeführt, wenn das Lambda größer als ein vorgegebener Wert ist. Mit Hilfe des vorgegebenen Werts kann damit unterschieden werden, ob das über die Tankentlüftung angesaugte Luft/Kraftstoff-Gemisch ausreichend fett und damit zündfähig oder zu mager und damit nicht zündfähig ist. Im letzteren Fall kann dann die dritte Betriebsart ausgeführt werden, während dies ansonsten nicht zwingend erforderlich ist.

Bei einer weiteren vorteilhaften Weiterbildung der Erfindung wird die Aufteilung des zusätzlichen Kraftstoffs auf die Verdichtungsphase und die Ansaugphase in Abhängigkeit von dem über die Tankentlüftung zugeführten Kraftstoff ermittelt.

Damit ist es möglich, die gesamte, dem Brennraum zugeführte Kraftstoffmasse dem von der Brennkraftmaschine zu erzeugenden Moment anzupassen.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. Als Steuerelement kann insbesondere ein elektrisches Speichermedium zur Anwendung kommen, beispielsweise ein Read-Only-Memory oder ein Flash-Memory.

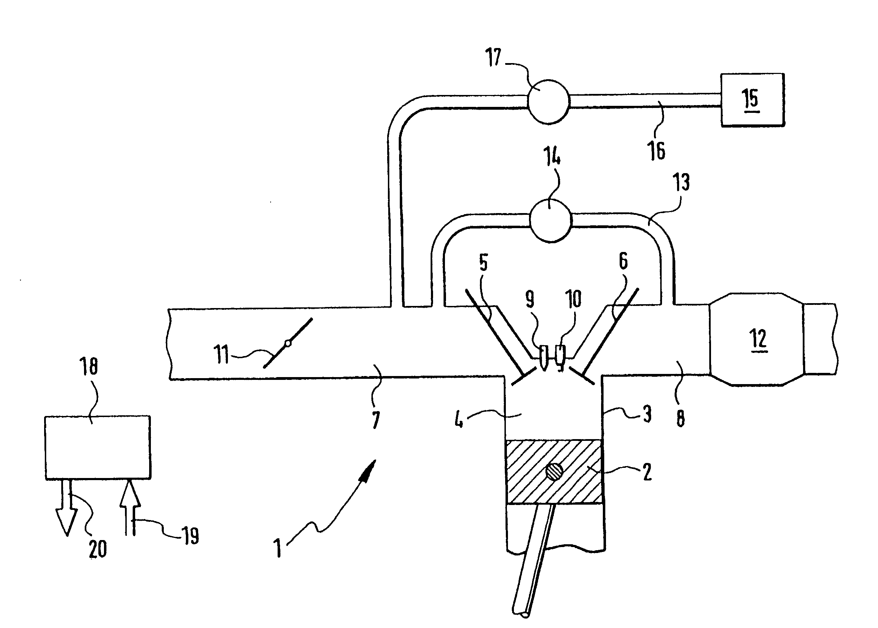

Weitere Merkmale, Anwendungsmöglichkeiten und Vorteile der Erfindung ergeben sich aus der nachfolgenden Beschreibung von Ausführungsbeispielen der Erfindung, die der Zeichnung dargestellt sind.

Die einzige Figur der Zeichnung zeigt eine schematische Darstellung eines Ausführungsbeispiels einer erfindungsgemäßen Brennkraftmaschine.

In der Figur ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlassventil 5 und ein Auslassventil 6 begrenzt ist. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Der Kolben 2 wird durch die Verbrennung des Kraftstoffs in dem Brennraum 4 in eine Hin- und Herbewegung versetzt, die auf eine nicht-dargestellte Kurbelwelle übertragen wird und auf diese ein Drehmoment ausübt.

Ein Abgasrückführrohr 13 verbindet das Abgasrohr 8 und das Ansaugrohr 7. In dem Abgasrückführrohr 13 ist ein Abgasrückführventil 14 untergebracht. Insgesamt wird auf diese Weise eine Abgasrückführung realisiert. Die Abgasrückführung kann, muss jedoch nicht zwingend vorhanden sein.

Ein Aktivkohlefilter 15 ist über ein Tankentlüftungsrohr 16 mit dem Ansaugrohr 7 verbunden. In dem Tankentlüftungsrohr 16 ist ein Tankentlüftungsventil 17 untergebracht. Das Aktivkohlefilter 15 ist einem Kraftstofftank zugeordnet. Aus dem Kraftstofftank verdunsteter Kraftstoff wird in dem Aktivkohlefilter 15 aufgenommen und zwischengespeichert. Bei geöffnetem Tankentlüftungsventil 17 kann der zwischengespeicherte Kraftstoff über das Tankentlüftungsrohr 16 in das Ansaugrohr 7 angesaugt werden. Insgesamt ist auf diese Weise eine Tankentlüftung realisiert.

Ein Steuergerät 18 ist von Eingangssignalen 19 beaufschlagt, die mittels Sensoren gemessene Betriebsgrößen der Brennkraftmaschine 1 darstellen. Beispielsweise ist das Steuergerät 18 mit einem Luftmassensensor, einem Lambda-Sensor, einem Drehzahlsensor und dergleichen verbunden. Des Weiteren ist das Steuergerät 18 mit einem Fahrpedalsensor verbunden, der ein Signal erzeugt, das die Stellung eines von einem Fahrer betätigbaren Fahrpedals und damit das angeforderte Drehmoment angibt. Das Steuergerät 18 erzeugt Ausgangssignale 20, mit denen über Aktoren bzw. Steller das Verhalten der Brennkraftmaschine 1 beeinflusst werden kann. Beispielsweise ist das Steuergerät 18 mit dem Einspritzventil 9, der Zündkerze 10, der Drosselklappe 11 und dem Tankentlüftungsvenil 17 und dergleichen verbunden und erzeugt die zu deren Ansteuerung erforderlichen Signale.

Unter anderem ist das Steuergerät 18 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 18 insbesondere im Hinblick auf einen geringen Kraftstoffverbrauch und/oder eine geringe Schadstoffentwicklung gesteuert und/oder geregelt. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im Wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb unter anderem von der Stellung der Drosselklappe 11 ab. Im Hinblick auf eine geringe Schadstoffentwicklung wird das Kraftstoff/Luft-Gemisch möglichst auf Lambda gleich Eins eingestellt.

In dieser ersten Betriebsart ist es möglich, das Tankentlüftungsventil 17 zu öffnen und damit zusätzlich zu der direkt eingespritzten Kraftstoffmasse ein Luft/Kraftstoff-Gemisch aus dem Aktivkohlefilter 15 in den Brennraum 4 anzusaugen. Die in dem angesaugten Luft/Kraftstoff-Gemisch enthaltene Kraftstoffmasse kann von dem Steuergerät 18 über Veränderungen von Lambda, die über den Lambda-Sensor erfasst werden, ermittelt und damit bei der Bestimmung der direkt eingespritzten Kraftstoffmasse berücksichtigt werden.

In einer zweiten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wird mit Hilfe der Zündkerze 10 der Kraftstoff entzündet, so dass der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im Wesentlichen ist der Schichtbetrieb für den Leerlaufbetrieb und den Teillastbetrieb der Brennkraftmaschine 1 vorgesehen.

Wird bei der zweiten Betriebsart das Tankentlüftungsventil 17 geöffnet und damit die Tankentlüftung aktiviert, so wird das Lambda des über die Tankentlüftung angesaugten Luft/Kraftstoff-Gemischs ermittelt. Hierzu wird die Konzentration des Kraftstoffs in dem Luft/Kraftstoff-Gemisch, die als solche berechenbar ist und damit von dem Steuergerät 18 zur Verfügung gestellt wird, herangezogen. Ebenfalls wird die Ermittlung von Lambda in Abhängigkeit von der dem Brennraum 4 über die Drosselklappe 11 zugeführten Luftmasse, die z.B. mittels eines Luftmassensensors erfassbar ist, durchgeführt.

Ist das ermittelte Lambda kleiner als ein vorgegebener Wert, so bedeutet dies, dass genügend Kraftstoff vorhanden ist und damit das in dem Brennraum 4 vorhandene Luft/Kraftst-off-Gemisch ausreichend fett ist, um von der Zündkerze 10 entzündet zu werden. In diesem Fall erfolgt gegebenenfalls noch eine zusätzliche Einspritzung von Kraftstoff über das Einspritzventil 9 in der Verdichtungsphase, also im Schichtbetrieb, um das von der Brennkraftmaschine 1 abzugebende Moment zu erzeugen.

Ist das ermittelte Lambda jedoch größer als der vorgegebene Wert, so bedeutet dies, dass nicht ausreichend Kraftstoff vorhanden ist und damit das in dem Brennraum 4 vorhandene Luft/Kraftstoff-Gemisch zu mager ist, um von der Zündkerze 10 entzündet zu werden. In diesem Fall wird die Brennkraftmaschine 1 entsprechend einer dritten Betriebsart betrieben.

In dieser dritten Betriebsart wird zusätzlicher Kraftstoff über das Einspritzventil 9 in den Brennraum 4 eingespritzt, und zwar einerseits während der Ansaugphase und andererseits während der Verdichtunasphase. Es handelt sich also um eine Doppeleinspritzung, die entsprechend einer Kombination des Homogenbetriebs und des Schichtbetriebs erfolgt.

Insbesondere durch die Einspritzung von Kraftstoff während der Ansaugphase wird das Luft/Kraftstoff-Gemisch in dem Brennraum 4 fetter und damit zündfähiger. Es ist damit möglich, das in dem Brennraum 4 befindliche Luft/Kraftstoff-Gemisch mittels der Zündkerze 10 zu entzünden.

Die Aufteilung des zusätzlich eingespritzten Kraftstoffs auf die Ansaugphase und die Verdichtungsphase wird in Abhängigkeit von dem über die Tankentlüftung dem Brennraum 4 zugeführten Luft/Kraftstoff-Gemischs von dem Steuergerät 18 ermittelt. Der insgesamt zusätzlich eingespritzte Kraftstoff hängt von dem von der Brennkraftmaschine zu erzeugenden Moment ab.

Das von der Brennkraftmaschine 1 erzeugte Moment setzt sich dabei aus demjenigen Moment zusammen, das aus dem mageren Luft/Kraftstoff-Gemisch resultiert, das über die Tankentlüftung aus dem Aktivkohlefilter 15 angesaugt worden ist, sowie aus demjenigen Moment, das aus derjenigen Kraftstoffmasse resultiert, die zusätzlich direkt in den Brennraum 4 eingespritzt wird.

Falls bei den beschriebenen Betriebsweisen der Brennkraftmaschine 1 ein größeres Moment entstehen sollte als angefordert wird, so kann über eine entsprechende Androsselung des Tankentlüftungsventils 17 und/oder der Drosselklappe 11 das erzeugte Moment auf den erwünschten Wert reduziert werden. Ebenfalls ist es möglich, das erzeugte Moment durch eine Spätverstellung der Entzündung zu reduzieren.

Der vorgegebene Wert für Lambda, bei dessen Überschreitung die beschriebene dritte Betriebsart und damit die Doppeleinspritzung durchgeführt wird, kann in Abhängigkeit von Betriebsgrößen der Brennkraftmaschine 1 appliziert werden.

## Patentansprüche

1. Verfahren zum Betreiben einer Brennkraftmaschine (1) insbesondere eines Kraftfahrzeugs, bei dem Kraftstoff in einer ersten Betriebsart während einer Ansaugphase oder in einer zweiten Betriebsart während einer Verdichtungsphase direkt von einem Einspritzventil (9) in einen Brennraum (4) eingespritzt und von einer Zündkerze (10) entzündet wird, und bei dem ein Luft/Kraftstoff-Gemisch über eine Tankentlüftung (15, 16, 17) in den Brennraum (4) angesaugt wird, **dadurch gekennzeichnet, dass** in einer dritten Betriebsart über die Tankentlüftung (15, 16, 17) ein mageres Luft/Kraftstoff-Gemisch in den Brennraum (4) angesaugt und zusätzlich Kraftstoff in der Ansaugphase und in der Verdichtungsphase in den Brennraum (4) eingespritzt wird.

2. Verfahren nach Anspruch 1, **dadurch gekennzeichnet, dass** das Lambda des über die Tankentlüftung angesaugten Luft/Kraftstoff-Gemischs ermittelt wird.

3. Verfahren nach Anspruch 2, **dadurch gekennzeichnet, dass** das Lambda in Abhängigkeit von der Konzentration des Luft/Kraftstoff-Gemischs ermittelt wird.

4. Verfahren nach einem der Ansprüche 2 oder 3, **dadurch gekennzeichnet, dass** das Lambda in Abhängigkeit von der angesaugten Luftmasse ermittelt wird.

5. Verfahren nach einem der Ansprüche 2 bis 4, **dadurch gekennzeichnet, dass** die dritte Betriebsart nur dann ausgeführt wird, wenn das Lambda größer als ein vorgegebener Wert ist.

6. Verfahren nach einem der Ansprüche 1 bis 5, **dadurch gekennzeichnet, dass** die Aufteilung des zusätzlichen Kraftstoffs auf die Verdichtungsphase und die Ansaugphase in Abhängigkeit von dem über die Tankentlüftung zugeführten Kraftstoff ermittelt wird.

7. Steuerelement, insbesondere Flash-Memory, für ein Steuergerät (18) einer Brennkraftmaschine (1) insbesondere eines Kraftfahrzeugs, **dadurch gekennzeichnet, dass** auf ihm ein Programm abgespeichert ist, das zur Anwendung in einem Verfahren nach einem der Ansprüche 1 bis 6 programmiert ist.

8. Steuergerät (18) für eine Brennkraftmaschine (1) insbesondere eines Kraftfahrzeugs, **dadurch gekennzeichnet, dass** es zur Anwendung in einem Verfahren nach einem der Ansprüche 1 bis 6 hergerichtet ist.

## Claims

1. Method for operating an internal combustion engine (1), in particular of a motor vehicle, in which fuel is injected directly into a combustion chamber (4) by an injection valve (9), in a first operating mode during an induction phase and in a second operating mode during a compression phase, and is ignited by a sparkplug (10), and in which an air/fuel mix is sucked into the combustion chamber (4) via a tank vent (15, 16, 17), **characterized in that** in a third operating mode a lean air/fuel mix is sucked into the combustion chamber (4) via the tank vent (15, 16, 17), and in addition fuel is injected into the combustion chamber (4) in the induction phase and in the compression phase.

2. Method according to Claim 1, **characterized in that** the lambda value of the air/fuel mix sucked in via the tank vent is determined.

3. Method according to Claim 2, **characterized in that** the lambda value is determined as a function of the concentration of the air/fuel mix.

4. Method according to either of Claims 2 and 3, **characterized in that** the lambda value is determined as a function of the air mass sucked in.

5. Method according to one of Claims 2 to 4, **characterized in that** the third operating mode is only implemented when the lambda value is greater than a predetermined value.

6. Method according to one of Claims 1 to 5, **characterized in that** the division of the additional fuel between the compression phase and the induction phase is determined as a function of the fuel supplied via the tank vent.

7. Control element, in particular flash memory, for a control unit (18) of an internal combustion engine (1), in particular of a motor vehicle, **characterized in that** a program which is programmed for use in a method according to one of Claims 1 to 6 is stored on the control element.

8. Control unit (18) for an internal combustion engine (1), in particular of a motor vehicle, **characterized in that** it is designed for use in a method according to one of Claims 1 to 6.

## Revendications

1. Procédé de fonctionnement d'un moteur à combustion interne (1), notamment d'un véhicule automobile, selon lequel le carburant est injecté directement par un injecteur (9) dans une chambre de combustion (4), dans un premier mode de fonctionnement pendant une phase d'aspiration et dans un deuxième mode de fonctionnement pendant une phase de compression, et allumé par une bougie d'allumage (10), et un mélange air/carburant est aspiré par une purge de réservoir (15, 16, 17) dans la chambre de combustion (4),
**caractérisé en ce que**
dans un troisième mode de fonctionnement un mélange air/carburant pauvre est aspiré par la purge de réservoir (15, 16, 17) dans la chambre de combustion (4), et du carburant supplémentaire est injecté dans la chambre de combustion (4) pendant la phase d'aspiration et la phase de compression.

2. Procédé selon la revendication 1,
**caractérisé en ce que**
le lambda du mélange air/carburant aspiré par la purge de réservoir est déterminé.

3. Procédé selon la revendication 2,
**caractérisé en ce que**
le lambda est déterminé en fonction de la concentration du mélange air/carburant.

4. Procédé selon l'une quelconque des revendications 2 ou 3,
**caractérisé en ce que**
le lambda est déterminé en fonction de la masse d'air aspirée.

5. Procédé selon l'une quelconque des revendications 2 à 4,
**caractérisé en ce que**
le troisième mode de fonctionnement n'est exécuté que lorsque le lambda est supérieur à une valeur prédéterminée.

6. Procédé selon l'une quelconque des revendications 1 à 5,
**caractérisé en ce que**
la répartition du carburant supplémentaire sur la phase de compression et la phase d'aspiration est déterminée en fonction du carburant amené par la purge de réservoir.

7. Elément de commande, notamment flash-memory, pour un appareil de commande (18) d'un moteur à combustion interne (1), notamment d'un véhicule automobile,
**caractérisé en ce qu'**
un programme stocké dans celui-ci est programmé pour mettre en oeuvre dans un procédé selon l'une quelconque des revendications 1 à 6.

8. Appareil de commande (18) pour un moteur à combustion interne (1), notamment d'un véhicule automobile,
**caractérisé en ce qu'**
il est prévu pour la mise en oeuvre du procédé selon l'une quelconque des revendications 1 à 6.
